Europäisches Patentamt

**European Patent Office**

Office européen des brevets

(19)

(11) Numéro de publication : **0 027 756 B1**

# FASCICULE DE BREVET EUROPÉEN

(12)

(45) Date de publication du fascicule du brevet :
**09.01.85**

(51) Int. Cl.⁴ : **F 01 D 21/04**

(21) Numéro de dépôt : **80401412.4**

(22) Date de dépôt : **03.10.80**

(54) **Dispositif de sécurité en cas de rupture d'élément rotatif de turbomachine.**

(30) Priorité : **19.10.79 FR 7925972**

(43) Date de publication de la demande :
**29.04.81 Bulletin 81/17**

(45) Mention de la délivrance du brevet :
**09.01.85 Bulletin 85/02**

(84) Etats contractants désignés :
**DE FR GB**

(56) Documents cités :
**FR-A- 2 018 042**
**FR-A- 2 023 964**
**FR-A- 2 216 174**
**FR-A- 2 375 443**
**US-A- 2 999 667**
**US-A- 3 203 180**
**US-A- 3 602 602**
**US-A- 3 974 313**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Porcelli, Gérard**
**30, rue du Tertre**
**F-91330 Yerres (FR)**

(74) Mandataire : **Moinat, François et al**
**S.N.E.C.M.A. Service des Brevets Boîte Postale 81**
**F-91003 Evry Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention concerne un dispositif de sécurité en cas de rupture d'élément rotatif de turbomachine, comprenant un anneau entourant un étage d'aubes sur lequel est enroulé un élément de forme longue, ledit anneau étant susceptible d'être traversé par la partie d'aube ou l'aube détachée qui se heurte à l'élément de forme longue dont les spires se déplacent pour absorber l'énergie cinétique.

Les aubes et les disques de rotor de machines tournantes peuvent en cas de rupture provoquer des effets secondaires très graves et même catastrophiques, en particulier lorsqu'il s'agit d'une machine assurant la propulsion d'un avion.

Afin de limiter les conséquences de tels incidents, on a entouré les carters des compresseurs et des turbines de blindages épais en acier. Le principal inconvénient de cette solution réside dans le poids et a pour effet de pénaliser les performances de la machine. Si les fragments sont retenus à l'intérieur du carter et ne vont pas endommager les autres organes de la machine, cette rétention même est bien souvent source de rupture en chaîne des aubes qui viennent buter contre le fragment bloqué dans le carter. Il s'ensuit l'explosion du rotor ou l'arrachement du moteur de son support.

Les constructeurs ont cherché des solutions à ce problème. C'est ainsi que le brevet français n° 2 018 042 décrit des moyens de retenue constitués par le carter et des bandes métalliques enroulées sur sa surface extérieure. Le sens d'enroulement des bandes est dans le sens opposé au sens normal de rotation et a pour effet, lorsque le fragment détaché du rotor vient heurter les bandes et les entraîner, de resserrer les spires par glissement d'où il résulte un frottement important qui absorbe l'énergie cinétique. L'enroulement est limité par l'élasticité du matériau constituant les bandes par suite de la fixation de leurs extrémités au carter et à la structure de montage fixe du moteur. L'énergie cinétique du fragment venant au contact des bandes a été en partie absorbée par le travail nécessaire à la perforation ou à la déformation du carter.

Le brevet FR-A 2 023 964 décrit une garniture composite pour amortissement acoustique fixée à la paroi interne d'un carter et comprenant dans l'ordre s'éloignant de ladite paroi une première couche de matériau cellulaire, une couche poreuse, une seconde couche cellulaire et une couche imperméable. Cette garniture ne présente toutefois aucune caractéristique la rendant apte à absorber l'énergie cinétique de fragments en cas de rupture d'élément rotatif de turbomachine. Les indications fournies par ces brevets FR-A 2 018 042 et FR-A 2 023 964 sont sensiblement insuffisantes pour permettre à l'homme du métier une conception efficace et satisfaisante d'un anneau de rétention qui comporterait en combinaison des éléments empruntés à chacune des deux dispositions.

Le brevet français n° 2 375 443 décrit un anneau de carter comportant une couche d'une matière à faible poids spécifique tel qu'un nid d'abeille fixé sur un anneau de retenue ayant une résistance mécanique élevée. Cet anneau est lui-même soutenu par des ailes susceptibles de s'écraser lors d'une déformation de l'anneau de retenue. L'anneau de carter est maintenu dans un support par des goupilles ou par frottement de manière qu'il puisse tourner sous l'impact du fragment détaché du rotor et absorber l'énergie cinétique même si l'anneau de retenue est déformé.

Enfin le brevet français n° 1 435 869 propose un anneau de retenue en une matière élastique et flexible monté de façon qu'il puisse être libre de se déplacer radialement vers l'extérieur en contact avec l'enveloppe par déformation ou par rupture de tenons de maintien.

Un carter de rétention doit réunir trois conditions qui ne se trouvent qu'en partie satisfaites par les réalisations précédentes ; à savoir le retrait rapide des fragments hors de l'enceinte du rotor ; l'absorption de l'énergie pour que, s'ils parviennent à franchir les limites du carter de rétention, leur énergie résiduelle soit insuffisante pour provoquer des dégâts ; et enfin être suffisamment léger pour ne pas absorber une fraction trop importante de la charge marchande de l'avion.

L'invention a pour but de réunir ces trois conditions et est remarquable en ce que le dispositif comporte de l'intérieur vers l'extérieur : une enveloppe interne, une première couronne de secteurs en un matériau déformable, un enroulement d'éléments de forme longue noyé dans une résine polymérisable, une deuxième couronne de secteurs en un matériau déformable et une enveloppe externe mince.

Les explications et les figures données ci-après à titre d'exemple permettront de bien comprendre comment l'invention peut être réalisée.

La figure 1 montre une vue schématique en coupe longitudinale du dispositif selon l'invention.

La figure 2 est une vue en coupe transversale du dispositif.

La figure 3 représente l'enroulement d'un tronçon de fil.

La figure 4 est un croquis explicatif du fonctionnement du dispositif.

La figure 5 est un exemple de réalisation d'un dispositif selon l'invention.

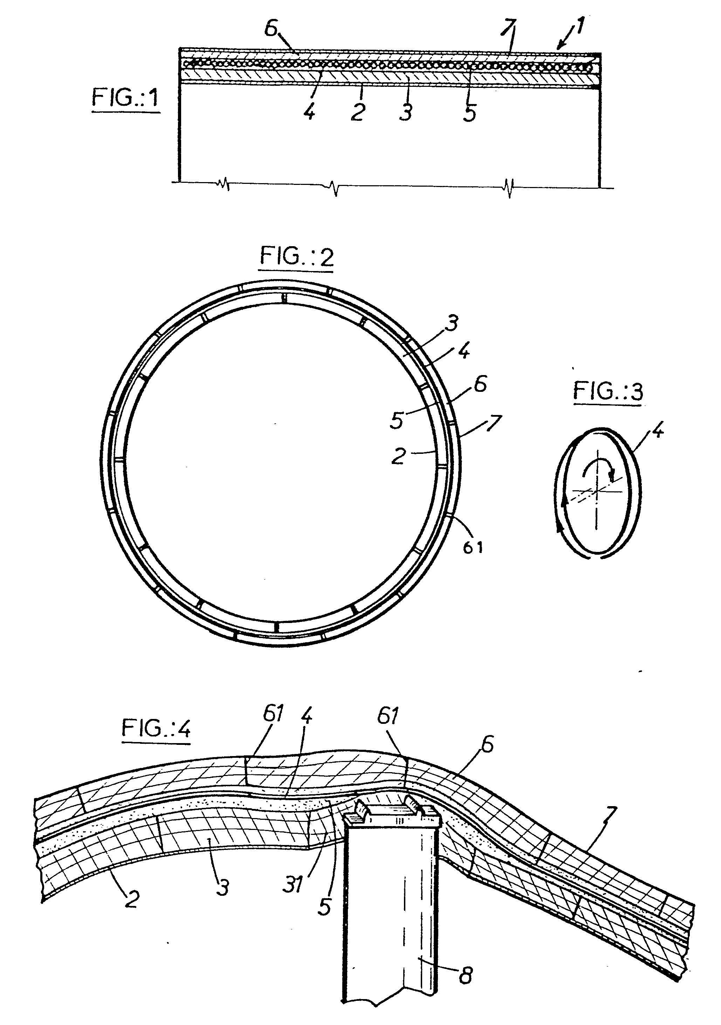

La figure 1 représente un dispositif de sécurité en cas de rupture d'aube d'une turbomachine et en particulier d'un turboréacteur. Ce dispositif 1 forme un anneau entourant un étage d'aubes (non représenté). L'anneau est constitué de l'intérieur vers l'extérieur :

— d'une enveloppe interne 2 en un matériau résistant et élastique tel que de l'acier, du titane, une résine synthétique armée de fibres, ou autre.

Cette enveloppe, selon l'encombrement extérieur du carter à protéger, peut être constituée en un seul ou plusieurs éléments ;

— d'une première couronne 3 de secteurs (figure 2), constituée d'un matériau capable d'une déformation permanente tel qu'un nid d'abeilles métallique ou composite dont les alvéoles sont garnies ou non, une mousse ou un feutre métallique, un matériau composite stratifié ou non, un matériau métallique homogène ou non, un matériau métallique homogène ou non de faible densité. Suivant une forme de réalisation, les secteurs sont maintenus en place par une couche de matériau polymérisable ;

— un enroulement 4 d'éléments de forme longue, les éléments étant constitués par un fil ou un câble de matériau métallique ou synthétique bobiné sur la couche de matériau polymérisable et les secteurs. Chaque élément forme au moins deux boucles complètes autour des segments, les extrémités de l'élément étant libres. Les éléments ont une longueur égale à au moins deux fois la longueur de la circonférence de l'enveloppe sur laquelle ils sont bobinés ou à un nombre entier de fois cette longueur, de manière à faire au moins deux tours complets de l'enveloppe. Le sens d'enroulement des éléments est celui du sens normal de rotation du rotor (figure 3). L'enroulement est noyé dans un matériau polymérisable 5 tel qu'une résine mousse de polyuréthane ou autre ;

— une deuxième couronne 6 de secteurs (figure 2) et en un matériau déformable identique ou non à celui de la première couronne. Les joints 61 des secteurs de la deuxième couronne sont disposés approximativement au milieu des secteurs de la première couronne ;

— une enveloppe externe 7 mince constituée en un seul ou plusieurs éléments.

Le mode d'action du dispositif selon l'invention va être décrit en regard de la figure 4.

L'aube ou le fragment d'aube 8, échappé de l'aubage du rotor, perce l'enveloppe interne 2 sous l'action de la force centrifuge et de l'énergie cinétique qu'il possède. Il pénètre dans le secteur 31 situé à l'aplomb du point d'appui. Le matériau du secteur s'écrase et le secteur tout entier se déforme sous la poussée centrifuge du fragment qui tend à l'éloigner du centre de la machine. Les éléments 4 s'opposent à ce mouvement. L'énergie cinétique du fragment est absorbée par le frottement des fils ou câbles 4 dans la couche 5 de résine ou mousse synthétique, et sous la forme d'effort interne de traction.

Les secteurs de la deuxième couronne 6 sont sollicités à leur tour, se déforment radialement et déforment l'enveloppe externe 7.

En résumé, l'énergie cinétique de l'aube ou du fragment d'aube est absorbée : par la perforation de l'enveloppe interne 2, par la déformation du secteur 3, par les frottements des câbles 4 sur la matrice 5 et leur allongement, par la déformation du secteur 6, par la déformation de l'enveloppe externe 7 et par mise en compression des secteurs intacts quand les câbles se tendent.

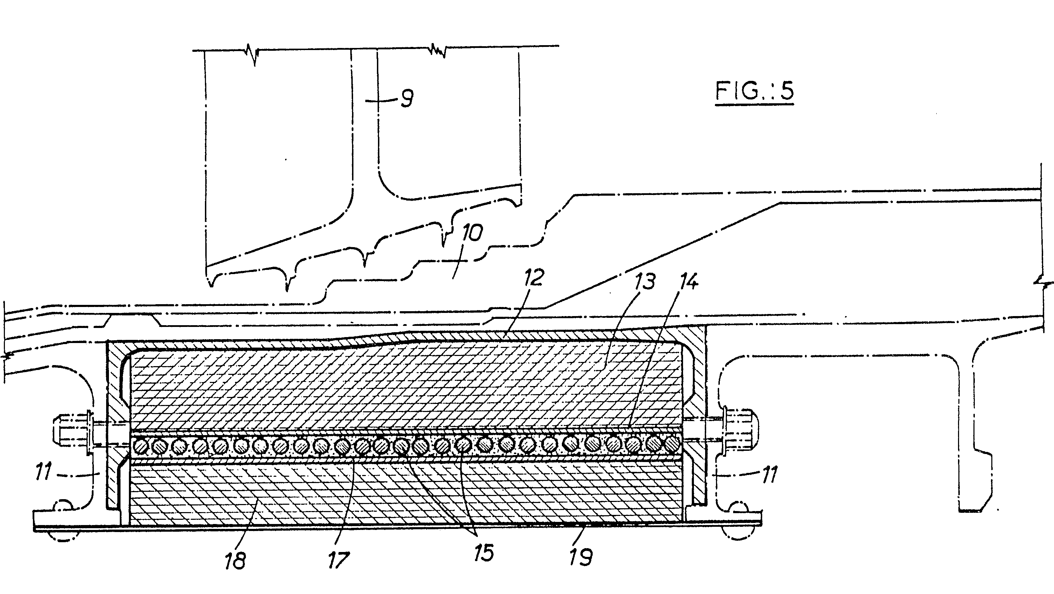

L'exemple de réalisation représenté figure 5, correspond à une application du dispositif à un moteur dont la soufflante a un diamètre de carter d'environ 1,8 mètre, pour un fragment d'aube de 0,8 Kg et dont la vitesse de projection correspond à une vitesse linéaire en bout d'aube de l'ordre de 200 m/s.

Le dispositif est fixé dans la zone balayée par l'aubage du compresseur et plus particulièrement en face d'une couronne d'aubes dont une, 9, est représentée. D'une manière classique, on a prévu une couche 10 d'un matériau susceptible d'entrer en contact avec les extrémités d'aubes sans leur occasionner d'avaries et formant joint d'étanchéité. Le dispositif se présente sous la forme d'un ensemble maintenu entre des supports 11 du carter du compresseur par boulonnage. L'enveloppe interne 12 est en acier d'une épaisseur de 1,5 à 2 mm. Pour des facilités de construction elle est constituée de deux demi-secteurs, dont la géométrie cylindrique ou conique dépend du type de moteur. La première couronne 13 est constituée de secteurs en nid d'abeilles d'acier d'une épaisseur de l'ordre de 20 mm. Les secteurs sont maintenus par une enveloppe 14 en acier de 0,5 à 0,8 mm d'épaisseur. Sur cette enveloppe est déposée une couche mince de résine mousse de polyuréthane. Des câbles 15, en polyimide de 4 mm de diamètre et dont la longueur permet de faire deux tours de l'enveloppe, sont enroulés, dans le sens de rotation du moteur, à spires pratiquement jointives. L'enroulement ainsi obtenu est noyé dans de la résine mousse. Une enveloppe 17 en acier de 0,5 à 0,8 mm d'épaisseur recouvre la couche précédente et supporte la deuxième couronne 18 formée de secteurs en nid d'abeilles de 15 mm d'épaisseur en un alliage léger. Cette couronne est maintenue par une enveloppe externe 19 en tôle d'acier de 0,5 à 0,8 mm d'épaisseur fixée par deux brides du carter.

Lorsque la couche 10 de matériau d'étanchéité est omise, la structure décrite peut servir de panneau acoustique, l'enveloppe interne 12 est alors perforée et les secteurs 13 constituent des résonateurs d'Helmholtz.

La structure décrite, du fait de l'emploi de mousse synthétique pour l'enrobage des câbles ne peut être utilisée pour la protection thermique. Un tel emploi nécessite un changement de matériau à la portée de l'homme de l'art.

**Revendications**

1. Dispositif de sécurité en cas de rupture d'élément rotatif de turbomachine disposé dans le carter de la machine, comprenant un anneau entourant un étage d'aubes sur lequel est enroulé un élément de forme longue, ledit anneau étant susceptible d'être traversé par la partie d'aube ou l'aube détachée qui se heurte à l'élément de forme longue dont les spires se déplacent pour absorber l'énergie cinétique, caractérisé en ce que le dispositif comporte de l'intérieur vers l'extérieur : une enveloppe interne (2 ; 12), se substituant au carter, une première couronne (3 ; 13) de secteurs en un matériau déformable, un enroulement (4) d'élément de forme longue noyé dans une résine polymérisable (5), une deuxième couronne (6 ; 18) de secteurs en un matériau déformable et une enveloppe externe mince (7 ; 19).

2. Dispositif selon la revendication 1, caractérisé en ce que l'enroulement (4) d'éléments de forme longue noyé dans une résine polymérisable est compris entre deux enveloppes (14, 17) d'un matériau élastiquement déformable, disposées entre lesdits éléments (4 et 5) et respectivement les première (3 ; 13) et deuxième (6 ; 18) couronnes de secteurs.

3. Dispositif selon la revendication 1 ou 2, caractérisé en ce que l'enroulement (4) d'éléments de forme longue est constitué de tronçons de fil (15) dont la longueur est au moins deux fois la longueur de circonférence de l'enveloppe sur laquelle ils sont bobinés et permettant de faire des boucles complètes, les extrémités des tronçons de fils (15) étant libres, et l'enroulement (4) étant fait dans le même sens que celui de rotation des aubes (8 ; 9).

4. Dispositif selon l'une des revendications précédentes caractérisé en ce que les secteurs (3 ; 13) sont formés d'un matériau en nid d'abeilles.

5. Dispositif selon la revendication 3 caractérisé en ce que l'enroulement (4) est constitué de câbles (15) en polyimide noyés dans une résine mousse.

6. Dispositif selon l'une des revendications précédentes caractérisé en ce que l'enveloppe interne (12) comporte des perforations et constitue avec les secteurs (13) des panneaux acoustiques.

7. Dispositif selon l'une des revendications précédentes caractérisé en ce qu'il est constitué d'une enveloppe interne (12) formée de deux demi-secteurs en acier, d'une première couronne (13) de secteurs en nid d'abeilles d'acier, d'une première enveloppe (14) en tôle d'acier, d'un bobinage en tronçons de câble (15) en polyimide, noyé dans une résine mousse, d'une seconde enveloppe (17) en tôle d'acier, d'une deuxième couronne (18) de secteurs en nid d'abeilles d'alliage léger et d'une enveloppe externe (19) en tôle d'acier boulonnée sur des brides (11) du carter de la machine.

**Claims**

1. Safety device in case of rupture of a rotary turbo machine part disposed within the casing of the machine, comprising a ring surrounding one blade stage on which is wound an elongate element, the said ring being capable of being traversed by a part of a blade or the blade which has become detached which is projected on to the elongate element of which the turns are displaced in order to absorb the kinetic energy, characterized in this that the device comprises from inside outwardly : an internal envelope (2 ; 12) substituted for the casing, a first annular array (3 ; 13) of sectors of deformable material, a winding (4) of elongate form embedded within a polymerisable resin (5), a second annular array (6 ; 18) of sectors of a deformable material and a thin external envelope (7 ; 19).

2. Device according to claim 1, characterized in this that the winding (4) of elongate elements embedded within a polymerisable resin lies between two envelopes (14, 17) of a resiliently deformable material, disposed between the said elements (4 and 5) and respectively the first (3 ; 13) and second (6 ; 18) of the sector arrays.

3. Device according to claim 1 or 2, characterized in this that the winding (4) of elongate elements is constituted by sections of wire (15) of which the width is at least twice the circumferential length of the envelope on which they are wound and enabling the formation of complete loops, the ends of the sections of the wires (15) being free and the winding (4) being formed by winding in the same sense as that of the rotation of the blades (8 ; 9).

4. Device according to one of the preceding claims, characterized in this that the sectors (3 ; 13) are formed of a honeycomb material.

5. Device according to claim 3, characterized in this that the winding (4) is constituted by cables (15) of polyimide embedded in a foamed resin.

6. Device according to one of the preceding claims, characterized in this that the internal envelope (12) has perforations and constitutes with the sectors (13) acoustic panels.

7. Device according to one of the preceding claims, characterized in this that it is constituted by an internal envelope (12) formed by two semi-sectors of steel, of a first annular array (13) of sectors of honeycomb steel, by a first envelope (14) of sheet steel, by a winding of sections of cable (15) of polyimide, embedded in a foamed resin, by a second envelope (17) of sheet steel, by a second annular array (18) of sectors of honeycomb of light alloy and by an external envelope (19) of steel bolted on to flanges (11) of the casing of the machine.

**Ansprüche**

1. Schutzvorrichtung für den Fall des Rotorbruchs bei einer Turbomaschine in dem Maschinengehäuse, mit einem eine Schaufelstufe umgebenden Ring, auf den ein langgestrecktes Element gewickelt ist und der von dem abgetrennten Schaufelteil oder der abgetrennten Schaufel durchschlagen werden kann, der (die) dann auf das langgestreckte Element aufprallt, dessen Windungen sich verlagern, um die kinetische Energie zu absorbieren, dadurch gekennzeichnet, daß die Vorrichtung, von innen nach außen gesehen, aus folgenden Teilen besteht : einer Innenhülle (2 ; 12) anstelle des Gehäuses, einem ersten Kranz (3 ; 13) von Bogenstücken aus einem verformbaren Werkstoff, einer Bewicklung (4) aus einem langgestreckten Element, das in ein polymerisierbares Harz (5) eingebettet ist, einem zweiten Kranz (6 ; 18) von Bogenstücken aus einem verformbaren Werkstoff und einer dünnen Außenhülle (7 ; 19).

2. Vorrichtung nach Anspruch 1, dadurch gekennzeichnet, daß die Bewicklung (4) aus langgestreckten, in ein polymerisierbares Harz eingebetteten Elementen sich zwischen zwei Umhüllungen (14, 17) aus einem elastisch verformbaren Werkstoff befindet, die zwischen den Elementen (4 und 5) und dem ersten (3 ; 13) bzw. zweiten (6 ; 19) Kranz von Bogenstücken vorgesehen sind.

3. Vorrichtung nach Anspruch 1 oder 2, dadurch gekennzeichnet, daß die Bewicklung (4) aus langgestreckten Elementen durch Fadenteilstücke (15) gebildet wird, deren Länge mindestens gleich der doppelten Umfangslänge der Umhüllung, auf die sie gewickelt sind, ist und die Bildung von vollständigen Windungen erlaubt, daß die Enden der Fadenteilstücke (15) freiliegen, und daß die Bewicklung (4) im gleichen Drehsinn verläuft wie die Drehung der Schaufeln (8 ; 9).

4. Vorrichtung nach einem der vorhergehenden Ansprüche, dadurch gekennzeichnet, daß die Bogenstücke (3 ; 13) aus einem Bienenwabenmaterial bestehen.

5. Vorrichtung nach Anspruch 3, dadurch gekennzeichnet, daß die Bewicklung (4) aus Kabeln (15) aus Polyimid besteht, die in einen Schaumkunststoff eingebettet sind.

6. Vorrichtung nach einem der vorhergehenden Ansprüche, dadurch gekennzeichnet, daß die Innenhülle (12) Öffnungen aufweist und in Verbindung mit den Bogenstücken (13) schalldämpfende Platten bildet.

7. Vorrichtung nach einem der vorhergehenden Ansprüche, dadurch gekennzeichnet, daß sie aus einer Innenhülle (12) besteht, die aus zwei Halbbogenstücken aus Stahl gebildet ist, ferner aus einem ersten Kranz (13) von Bogenstücken aus bienenwabenartig geformtem Stahl, einer ersten Umhüllung (14) aus Stahlblech, einer Bewicklung aus Kabelteilstücken (15) aus Polyimid, eingebettet in einen Schaumkunststoff, einer zweiten Umhüllung (17) aus Stahlblech, einem zweiten Kranz (18) von Bogenstücken aus bienenwabenartig geformtem Leichtmetall und einer auf Flansche (11) des Maschinengehäuses geschraubten Außenhülle (19) aus Stahl.

FIG.:1

FIG.:2

FIG.:3

FIG.:4

FIG.:5

0 027 756